# EUROPÄISCHE PATENTANMELDUNG

(11) **EP 4 585 497 A1**
(43) Veröffentlichungstag der Anmeldung: **16.07.2025**
(21) Anmeldenummer: 25151127.5
(22) Anmeldetag: 10.01.2025
(51) Int. Cl.: B62D 25/24

(54) **SCHLAUCHFORMTEIL**

(30) Priorität: 12.01.2024 DE 202024100124 U
(71) Anmelder: Schoen, Hugo, 63628 Bad Soden-Salmünster (DE)
(72) Erfinder: Schoen, Hugo, 63628 Bad Soden-Salmünster (DE)
(74) Vertreter: Göring, Jan

(57) **Zusammenfassung**

Bei einem Schlauchformteil (1) zum Entwässern und/oder Entlüften eines Raums in einem Kraftfahrzeug, welches einen Schlauchabschnitt (3) mit einem ersten Ende und einem zweiten Ende umfasst, ist vorgesehen, dass der Schlauchabschnitt (3) mit einer am ersten Ende des Schlauchabschnitts (3) angeordneten Montagetülle (5) und/oder mit einem am zweiten Ende des Schlauchabschnitts (3) angeordneten Steckverbinder (7) materialeinheitlich gebildet ist.

## Beschreibung

Die Erfindung betrifft ein Schlauchformteil zum Entwässern und/oder Entlüften eines Raums in einem Kraftfahrzeug und ein Kraftfahrzeug mit einem solchen Schlauchformteil. Solche Schlauchformteile kommen beispielsweise zur Entwässerung von Schiebedächern, Kofferraumklappen oder der Tankstutzen- beziehungsweise Ladestutzen-Schale zum Einsatz, wie auch zur Entlüftung von LED-Scheinwerfern.

Die gebräuchlichen Entwässerungsschläuche bestehen aus mehreren stoffschlüssig miteinander verbundenen Komponenten aus unterschiedlichen Materialien. Häufig ist ein länglicher Schlauchabschnitt aus PVC gebildet, das sehr schlecht recyclebar ist und unter Hitzeeinwirkung, etwa im Falle eines Brandes, giftige Dämpfe abgibt. Entwässerungsschläuche haben zur Befestigung ihrer Enden üblicherweise einerseits einen einlaufseitigen Steckverbinder und andererseits eine auslaufseitige Montagetülle. Der Steckverbinder ist typischerweise gebildet aus einem formstabilen Material wie TPU. Solche Steckverbinder sind häufig zum Aufsteckmontage an einem kugelförmigen Anschluss mit einem vorbestimmten Außendurchmesser ausgestaltet. Die Montagetülle wird häufig aus TPC oder EPDM gebildet. Steckverbinder und Montagetülle werden im Allgemeinen durch Überspritzen oder Verkleben stoffschlüssig mit dem Schlauchabschnitt verbunden. Bei einigen Ausführungsformen ist die Montagetülle mit einer darin befestigten Abdeckklappe aus TPE, EPDM oder einem anderen Gummimaterial ausgestattet. Weil solche Entwässerungsschläuche aus verschiedenen Materialien zusammengesetzt sind, müssten sie zum Materialrecycling zunächst in die einzelnen Materialien zerlegt werden, um eine anschließende sortenreine Weiterverarbeitung zu ermöglichen. Die Verwendung unterschiedlicher Materialien als erforderlich angesehen, damit Schlauchformteile den zahlreichen verschiedenen mechanischen und chemischen Anforderungen gerecht werden, die an sie gestellt werden. Die materialschlüssig verbundenen Bereiche zwischen dem Schlauchabschnitt und dem Steckverbinder bzw. der Montagetülle sowie zwischen der Montagetülle und der Abdeckklappe lassen keine saubere Materialtrennung zu. Ferner können manche der Materialien, insbesondere PVC, praktisch nicht recycelt werden.

Es ist eine Aufgabe der Erfindung, die Nachteile des Stands der Technik zu überwinden, insbesondere ein Schlauchformteil mit verbesserten Recyclingeigenschaften bereitzustellen. Diese Aufgabe löst der Gegenstand von Anspruch 1.

Demnach ist ein Schlauchformteil zum Entwässern und/oder Entlüften eines Raums in einem Kraftfahrzeug vorgesehen. Ein solcher Raum kann insbesondere ein Rahmen für ein Schiebedach, eine Kofferraumklappe, eine Tankstutzen- beziehungsweise Ladestutzen-Schale oder dergleichen sein oder beispielsweise ein Innenhohlraum eines LED-Scheinwerfers.

Das erfindungsgemäße ein Schlauchformteil umfasst einen Schlauchabschnitt mit einem ersten Ende und einem zweiten Ende. Der Schlauchabschnitt bildet vorzugsweise einen schlauchartigen Körper. Das erste Ende und das zweite Ende des Schlauchabschnitts sind fluidisch miteinander verbunden. Insbesondere ist der Schlauchabschnitt dazu ausgelegt und eingerichtet, dass Luft, Wasser oder ein anderes Fluid vom ersten Ende zum zweiten Ende bzw. vom zweiten Ende zum ersten Ende durch das Schlauchformteil geführt werden kann. Ferner umfasst das Schlauchformteil eine Montagetülle und/oder einen Steckverbinder. Die Montagetülle kann an dem ersten Ende kann eine Montagetülle angeordnet. Zusätzlich oder alternativ kann der Steckverbinder an dem zweiten Ende angeordnet sein. Der Steckverbinder kann vorzugsweise zur Aufsteckmontage an einem kugelförmigen Anschluss, insbesondere mit einem vorbestimmten Außendurchmesser im Bereich 10 mm bis 30 mm, vorzugsweise 16 mm, ausgestaltet sein.

Gemäß der vorliegenden Offenbarung ist der Schlauchabschnitt mit Montagetülle und/oder dem Steckverbinder materialeinheitlich gebildet ist. Überraschenderweise hat der Erfinder herausgefunden, dass es entgegen der bestehenden Vorurteile möglich ist, unter Verwendung desselben Materials für sowohl das Schlauchformteil als auch den Steckverbinder oder die Montagetülle den an Entwässerungssysteme gestellten technischen Anforderungen zu genügen. Dank der dabei erfolgenden die Reduktion an Materialpaarungen kann das so gebildete Schlauchformteil sehr viel effizienter einem Recycling unterzogen werden als die bekannten Entwässerungssysteme.

Gemäß einer bevorzugten Ausführung sind der Schlauchabschnitt, die am ersten Ende des Schlauchabschnitts angeordnete Montagetülle und der am zweiten Ende des Schlauchabschnitts angeordnete Steckverbinder materialeinheitlich gebildet. Der Schlauchabschnitt, der Steckverbinder und die Montagetülle bestehen vorzugsweise im Wesentlichen aus demselben Material. Besonders bevorzug ist das Schlauchformteil zu wenigstens 90 Gew.-%, insbesondere wenigstens 95 Gew.-%, weiter bevorzugt zu wenigstens 99 Gew.-% oder zu wenigstens 99,9 Gew.-% materialeinheitlich gebildet. Es sei klar, dass das Schlauchformteil insbesondere technisch unvermeidbare Unreinheiten oder Markierungen, wie Beschriftungen, Etiketten oder Farbmarkierungen, aufweisen kann. Die Markierungen oder Beschriftungen machen in der Regel nur sehr nur geringe Stoffmengen aus, die beim Recycling vernachlässigbar sind.

Das materialeinheitliche Grundmaterial des Schlauchformteils ist in verschiedenen Shorehärten und/oder Farben einstellbar. Es kann bevorzugt sein, dass der Schlauchabschnitt und die Montagetülle aus Materialien mit unterschiedlicher Shorehärte gebildet sind. Vorzugsweise ist die Shore-A-Härte der Montagetülle kleiner oder gleich der Shore-A-Härte des Schlauchabschnitts. Insbesondere hat die Montagetülle eine geringere Shore-A-Härte als der Schlauchabschnitt. Vorzugsweise hat Schlauchabschnitt eine Härte von 50 bis 80 Shore A aufweisen, insbesondere 70±5 Shore A. Die Montagetülle kann bevorzugt eine Härte von 40 bis 70 Shore A aufweisen, insbesondere 65±5 Shore A. Der Steckverbinder kann bevorzugt aus einem Material mit einer anderen Shorehärte als der Schlauchabschnitt und/oder die Montagetülle gebildet sein. Vorzugsweise hat der Steckverbinder eine größere Shore-A-Härte als der Schlauchabschnitt und/oder die Montagetülle. Insbesondere hat der Schlauchabschnitt eine geringere Shore-A-Härte als der Steckverbinder. Der Steckverbinder kann vorzugsweise eine Härte von 80 bis 100 Shore A aufweisen, insbesondere 90±5 Shore A. Das optionale Membranventil kann bevorzugt aus einem Material mit einer anderen Shorehärte als die Montagetülle gebildet sein. Vorzugsweise hat Das Membranventil eine geringere Shore-A-Härte als die Montagetülle. Das optionale Membranventil hat bevorzugt eine Härte von 35 bis 50 Shore A aufweisen, insbesondere 40±5 Shore A. Die Shore(-A-)härte kann vorzugsweise nach DIN 53505 (2000-08) bestimmt werden.Vorzugsweise umfasst der Schlauchabschnitt ein TPE-Material (sog. Thermoplastisches-Elastomer-Material) oder besteht daraus. Die bzw. der materialgleich mit dem Schlauchabschnitt gebildete Montagetülle und/oder Steckverbinder umfasst vorzugsweise ebenfalls das TPE-Material oder besteht daraus. Das TPE-Material kann ausgewählt sein aus der Gruppe umfassend TPA (Thermoplastische Polyamidelastomere), TPC, (Thermoplastische Copolyesterelastomere), TPO (Thermoplastische Elastomere auf Olefinbasis), TPS (Thermoplastishe Styrol-Blockcopolymere, insbesondere SBS, SEBS, SEPS, SEEPS und MBS), TPU (Thermoplastische Elastomere auf Urethanbasis), TPV (Thermoplastische Vulkanisate oder vernetzte thermoplastische Elastomere auf Olefinbasis), TPZ (nicht klassifizierte thermoplastische Elastomere anderer Zusammensetzung oder Struktur). Es kann bevorzugt sein, dass das TPE-Material mehrere von TPA, TPC, TPO, TPS, insbesondere TPS-SBS, TPS-SEBS, TPS-SEPS, TPS-SEEPS oder TPS-MBS, TPU, TPV oder TPZ umfasst oder daraus besteht. Alternativ kann bevorzugt sein, dass das TPE-Material aus genau einem Material ausgewählt aus der Gruppe umfassend TPA, TPC, TPO, TPS, insbesondere TPS-SBS, TPS-SEBS, TPS-SEPS, TPS-SEEPS oder TPS-MBS, TPU, TPV oder TPZ besteht. Der Erfinder hat überraschenderweise herausgefunden, dass TPE-Material anders als landläufig angenommen eine geeignete Alternative für das Material eines Schlauchabschnitts eines Schlauchformteils zum Entwässern oder Entlüften eines Kraftfahrzeugbereichs darstellt. Durch die Verwendung von TPE-Material lässt sich ein sortenreines Schlauchformteil herstellen, das nicht nur den mechanischen Anforderungen genügt, sondern darüber hinaus hervorragende Recyclingeigenschaften besitzt. TPE-Material kann granuliert und wieder eingeschmolzen werden, sodass das Material eines Schlauchformteils einfach und vollständig für ein anderes Kunststoffbauteil wiederverwendet werden kann.

Besonders bevorzugt kann das TPE-Material TPS-SEBS (Styrol-Ethylen-Butylen-Styrol) umfassen oder daraus bestehen. Der Erfinder hat herausgefunden, dass sich TPS-SEBS in außergewöhnlich hohem Maße dazu eignet, sowohl die mechanischen Anforderungen, die an den Steckverbinder und die Montagetülle gestellt werden, wie auch die Anforderungen an den Schlauchabschnitt in Bezug auf Druckfestigkeit, sowie Anforderungen des Schlauchformteils in Bezug auf Beständigkeit gegen Wasser, Chemikalien sowie Temperaturbeständigkeit zu erfüllen.

Gemäß einer anderen bevorzugten Ausführung umfasst der Schlauchabschnitt ein EPDM-Material umfasst oder besteht daraus. EPDM-Material kann im allgemeinen Ethylen-Propylen-Dien-Kautschuk-Materialien bezeichnen. Die bzw. der materialgleich mit dem Schlauchabschnitt gebildete Montagetülle und/oder Steckverbinder umfasst vorzugsweise ebenfalls das EPDM-Material oder besteht daraus. EPDM gilt als Material, das bei der Herstellung, Verarbeitung und Nutzung nur in geringem Maße belastend auf die Umwelt einwirkt und eine lange Nutzungsdauer aufweist. EPDM-Material bietet daher eine nachhaltige Alternative zu Schlauchformteilen, die PVC enthalten. EPDM-Material aus gebrauchten Schlauchformteilen kann granuliert werden, um für andere Anwendungen weiterverwendet zu werden.

Es kann zweckmäßig sein, wenn der Steckverbinder und/oder die Montagetülle an dem Schlauchabschnitt befestigt ist. Vorzugsweise sind sowohl der Steckverbinder als auch die Montagetülle fest mit dem Schlauchabschnitt verbunden. Steckverbinder und/oder Montagetülle können beispielsweise mechanisch an den Schlauchabschnitt festgelegt oder daran angeklebt sein. Insbesondere ist der Schlauchabschnitt an seinem ersten Ende materialschlüssig mit der Montagetülle verbunden. Alternativ oder zusätzlich kann es bevorzugt sein, dass der Schlauchabschnitt an seinem zweiten Ende materialschlüssig mit dem Steckverbinder verbunden ist. Vorzugsweise ist der der Steckverbinder und/oder die Montagetülle formschlüssig mit dem Schlauchabschnitt verschmolzen. Beispielsweise ist der der Steckverbinder und/oder die Montagetülle an dem Schlauchabschnitt anvulkanisiert oder angespritzt.

Bei einer Ausführungsform eines Schlauchformteils, die mit den vorigen kombinierbar ist, umfasst das Schlauchformteil ein in die Montagetülle vorzugsweise lösbar eingesetztes Membranventil umfasst. Ein Membranventil kann vorgesehen sein, um das Eindringen von Schmutzpartikeln, Spritzwasser oder Abgasen aus dem Außenbereich durch das Schlauchformteil ins Innere des Kraftfahrzeugs zu verhindern. Es kann bevorzugt sein, dass das Membranventil wird nachträglich montierbar ist.

Bei einer bevorzugten Weiterbildung des Schlauchformteils mit Membranventil ist das Membranventil materialeinheitlich mit der Montagetülle und/oder dem Schlauchabschnitt gebildet. Bei dieser Ausführungsform kann das mit dem Membranventil ausgestattete Schlauchformteil einfach vollständig und ohne mechanische Vereinzelung der Komponenten recycelt, beispielsweise wieder eingeschmolzen, werden. Das Membranventil kann bei materialeinheitlicher Ausführung ohne Demontage zusammen mit der Montagetülle oder dem gesamtem Schlauchformteil recycelt werden, weil diese aus dem gleichen Grundmaterial gebildet sind.

Bei einer bevorzugten Ausführung eines Schlauchformteils gemäß der vorliegenden Offenbarung, die mit den übrigen kombinierbar ist, weist der Schlauchabschnitt eine Wandstärke im Bereich 0,5 mm bis 2 mm, vorzugsweise im Bereich von 1 mm bis 1,5 mm, auf. Vorzugsweise hat der Schlauchabschnitt vom ersten Ende zum zweiten Ende eine konstante oder im wesentlichen Konstante Wandstärke. Die Wandstärke und damit das Gewicht des Schlauchformteils gemäß der vorliegenden beträgt nur etwas mehr als die Hälfte eines konventionellen Teils. Dadurch kann das Gewicht der Entwässerungsschläuche in einem Kraftfahrzeug in erheblichem Maße reduziert werden. Im Vergleich zu einem Kraftfahrzeug mit typischerweise vier konventionellen Entwässerungsschläuchen kann das Gewicht der Schlauchformteile in Summe von rund 500 g auf ca. 320 g reduziert werden.

Im Vergleich zu der Variante 2 aus EPDM-Gummi kann bei dem neu entwickelten Material bei allen Einzelteilen mit deutlich dünnerer Wandstärke gearbeitet werden, was eine hohe Gewichtseinsparung ergibt. Auch das trägt zusätzlich zur Nachhaltigkeit dieser Bauteile bei.

Die Erfindung betrifft auch ein Kraftfahrzeug, einen, insbesondere in einer Fahrzeugkarosserie gebildeten, Raum aufweist, sowie wenigstens eine mit diesem Raum verbundenes Schlauchformteil, das wie oben beschrieben ausgeführt ist. Insbesondere ist der Raum mit einem Kugelanschluss zum Entwässern ausgestattet und das Schlauchformteil umfasst einen an diesen Kugelanschluss formangepassten Steckverbinder, der auf den Kugelanschluss aufsteckbar oder aufgesteckt ist, um Wasser aus dem Raum durch das Schlauchformteil abzuleiten. Es kann bevorzugt sein, dass in einem betriebsgemäßen Einbauzustand des Schlauchformteils das zweite Ende des Schlauchformteils in einer schwerkraftgemäßen Vertikalrichtung oberhalb der Montagetülle angeordnet ist. Vorzugsweise kann der Schlauchabschnitt mittels des Steckverbinders an dem Raum, insbesondere einem Kugelanschluss des Raums, befestigt sein. Vorzugsweise bildet eine Auffangwanne den mit dem Schlauchformteil verbundenen Raum. Es ist denkbar, dass das Kraftfahrzeug mehrere Schlauchformteile aufweist, die mit dem Raum oder mehreren Räumen innerhalb des Kraftfahrzeugs verbunden sind. Das Schlauchformteil kann zumindest abschnittsweise an oder in der Fahrzeugkarosserie angeordnet sein. Die Montagetülle ist vorzugsweise in einem der Bodenfläche, auf welcher Fahrzeug, insbesondere das Kraftfahrzeug sich bewegt, zugewandten Bereich der Fahrzeugkarosserie angeordnet, um auszuleitendes Wasser an die Bodenfläche abzugeben. Vorzugsweise ist das Schlauchformteil in dem Kraftfahrzeug mit in Vertikalrichtung nach unten gerichteter Montagetülle und an deren Unterseite, insbesondere nach unten ausgerichteter Sitzfläche, angeordnetem Membranventil vorgesehen.

Bevorzugte Ausführungen der Erfindung werden in den abhängigen Ansprüchen beschrieben. Weitere Eigenschaften, Vorteile und Merkmale der Erfindung werden durch die folgende Beschreibung von bevorzugten Ausführungen der Erfindung anhand der beiliegenden Zeichnung deutlich, in der zeigt:

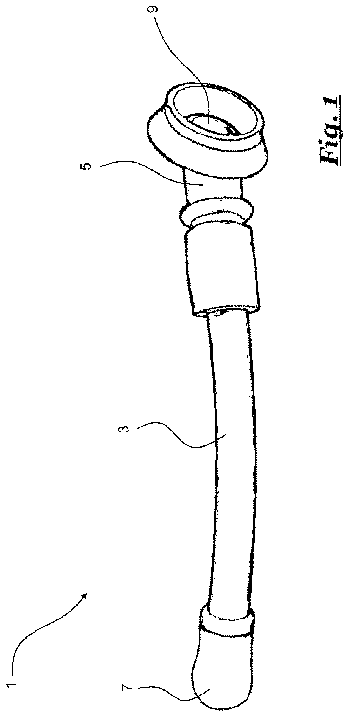

- Figur 1: eine schematische Darstellung eines Schlauchformteils.

In der nachfolgenden Beschreibung bevorzugter Ausführungen anhand der Figuren werden zur Vereinfachung der Lesbarkeit dieselben oder ähnliche Komponenten mit denselben oder ähnlichen Bezugszeichen versehen.

Ein erfindungsgemäßes Schlauchformteil wird im Allgemeinen mit dem Bezugszeichen 1 bezeichnet. Als wesentliche Komponenten umfasst das in Figur 1 abgebildete Schlauchformteil 1 einen Schlauchabschnitt 3 sowie eine an dem Schlauchabschnitt 3 befestigte Montagetülle 5 und einem an dem Schlauchabschnitt befestigten Steckverbinder 7.

Die Montagetülle 3 kann mit einem Membranventil 9 ausgestattet sein. Das Membranventil 9 kann in die Montagetülle 3 eingesetzt sein. Das Montageventil 9 kann lösbar eingesetzt sein oder materialschlüssig mit der Montagetülle 3 verbunden sein. Vorzugsweise sind die Montagetülle 3 und das Membranventil 9 materialeinheitlich gebildet. Das Membranventil 9 und die Montagetülle können vorzugsweise aus einem EPDM-Material oder einem TPE-Material, insbesondere TPS-SEBS, gebildet sein. Es ist denkbar, die Montagetülle 3 und das Membranventil 9 einstückig und materialeinheitlich gebildet sind, etwa als ein einziges Spritzgussteil. Bei dem materialeinheitlich aus TPS-SEBS gebildeten Schlauchformteil 1 kann der Schlauchabschnitt mit einer Härte von 70±5 Shore A, die Montagetülle mit einer Härte von 65±5 Shore A und der Steckverbinder 7 mit einer Härte von 90±5 Shore A gebildet sein.

Bei manchen Ausführungen kann der Steckverbinder 7 optional sein. Zum Beispiel kann ein Schlauchformteil zum Be- und/oder Entlüften des Innenraums eines LED-Scheinwerfers ohne Steckverbinder ausgeführt sein (nicht abgebildet). In einer derartigen Ausführung besteht das Schlauchformteil aus dem Schlauchabschnitt, der Montagetülle, die materialeinheitlich gebildet sind, sowie gegebenenfalls dem Membranventil. Alternativ ist eine Ausführungsform eines Schlauchformteils ohne Montagetülle denkbar. Bei dieser alternativen Ausführungsform besteht das Schlauchformteil aus dem Steckverbinder und dem Schlauchabschnitt, die materialeinheitlich gebildet sind.

Gemäß einer bevorzugten Ausführung kann das Schlauchformteil 1 materialeinheitlich aus EPDM gebildet sein. Der Schlauchabschnitt 3 sowie die an dessen Enden angebrachten Anschlussteile, zum einen die Montagetülle 5 und zum anderen der Steckverbinder 5, können beispielsweise zunächst als einzelne Halbzeuge vorgefertigt und sodann, etwa in einem Autoklaven, durch Vulkanisieren materialschlüssig miteinander verbunden werden.

Gemäß einer anderen bevorzugten Ausführung kann das Schlauchformteil 1 materialeinheitlich aus einem TPE-Material, vorzugsweise TPS-SEBS, gebildet sein. Der Schlauchabschnitt 3 kann in einem Extrusionsverfahren hergestellt und anforderungsgerecht abgelängt werden. Sodann können die Montagetülle 5 und/oder der Steckverbinder 7 an dem Schlauchabschnitt 3 materialschlüssig befestigt werden, vorzugsweise durch Anspritzen. Der Schlauchabschnitt 3 kann eine konstante Wandstärke im Bereich von 1 mm bis 1,5 mm aufweisen.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichen:

- 1: Schlauchformteil
- 3: Schlauchabschnitt
- 5: Montagetülle
- 7: Steckverbinder
- 9: Membranventil

## Patentansprüche

1. Schlauchformteil (1) zum Entwässern und/oder Entlüften eines Raums in einem Kraftfahrzeug, umfassend
einen Schlauchabschnitt (3) mit einem ersten Ende und einem zweiten Ende,
**dadurch gekennzeichnet, dass**
der Schlauchabschnitt (3) mit einer am ersten Ende des Schlauchabschnitts (3) angeordneten Montagetülle (5) und/oder mit einem am zweiten Ende des Schlauchabschnitts (3) angeordneten Steckverbinder (7) materialeinheitlich gebildet ist.

2. Schlauchformteil (1) nach Anspruch 1, **dadurch gekennzeichnet, dass** der Schlauchabschnitt (3), die am ersten Ende des Schlauchabschnitts (3) angeordnete Montagetülle (5) und der am zweiten Ende des Schlauchabschnitts (3) angeordnete Steckverbinder (7) materialeinheitlich gebildet sind.

3. Schlauchformteil (1) nach einem der vorstehenden Ansprüche, **dadurch gekennzeichnet, dass** der Schlauchabschnitt (3) und die Montagetülle (5) aus Materialien mit unterschiedlicher Shorehärte gebildet sind, wobei vorzugsweise das Membranventil (9) eine geringere Shorehärte aufweist als der Schlauchabschnitt (3).

4. Schlauchformteil (1) nach einem der vorstehenden Ansprüche, **dadurch gekennzeichnet, dass** der Schlauchabschnitt (3) und der Steckverbinder (7) aus Materialien mit unterschiedlicher Shorehärte gebildet sind, wobei vorzugsweise der Schlauchabschnitt (3) eine geringere Shorehärte aufweist als der Steckverbinder (7).

5. Schlauchformteil (1) nach Anspruch 1 oder 2, **dadurch gekennzeichnet, dass** der Schlauchabschnitt (3) ein TPE-Material umfasst oder daraus besteht.

6. Schlauchformteil (1) nach Anspruch 3, **dadurch gekennzeichnet, dass** das TPE-Material TPS-SEBS umfasst oder daraus besteht.

7. Schlauchformteil (1) nach Anspruch 1 oder 2, **dadurch gekennzeichnet, dass** der Schlauchabschnitt (3) ein EPDM-Material umfasst oder daraus besteht.

8. Schlauchformteil (1) nach einem der vorstehenden Ansprüche, **dadurch gekennzeichnet, dass** der Steckverbinder (7) und/oder die Montagetülle (5) an dem Schlauchabschnitt (3) befestigt ist.

9. Schlauchformteil (1) nach Anspruch 8, **dadurch gekennzeichnet, dass** der Steckverbinder (7) und/oder die Montagetülle (5) formschlüssig mit dem Schlauchabschnitt (3) verschmolzen ist.

10. Schlauchformteil (1) nach einem der vorstehenden Ansprüche, **dadurch gekennzeichnet, dass** das Schlauchformteil (1) ein in die Montagetülle (5) vorzugsweise lösbar eingesetztes Membranventil (9) umfasst.

11. Schlauchformteil (1) nach Anspruch 10, **dadurch gekennzeichnet, dass** das Membranventil (9) materialeinheitlich mit der Montagetülle (5) gebildet ist.

12. Schlauchformteil (1) nach Anspruch 10 oder 11, **dadurch gekennzeichnet, dass** das Membranventil (9) und die Montagetülle (5) aus Materialien mit unterschiedlicher Shorehärte gebildet sind, wobei vorzugsweise das Membranventil (9) eine geringere Shorehärte aufweist als die Montagetülle (5).

13. Schlauchformteil (1) nach einem der vorstehenden Ansprüche, **dadurch gekennzeichnet, dass** der Schlauchabschnitt (3) eine Wandstärke im Bereich 0,5 mm bis 2 mm, vorzugsweise im Bereich von 1 mm bis 1,5 mm, aufweist.

14. Kraftfahrzeug, umfassend einen Raum, und wenigstens eine mit dem Raum verbundenes Schlauchformteil (1) nach einem der vorstehenden Ansprüche.
